# EUROPEAN PATENT APPLICATION

(11) **EP 4 595 842 A1**
(43) Date of publication of application: **06.08.2025**
(21) Application number: 25155269.1
(22) Date of filing: 31.01.2025
(51) Int. Cl.: A47J 42/04, A47J 42/34

(54) **A GRINDER**

(30) Priority: 01.02.2024 DK PA202430051
(71) Applicant: Norby Navigation Light ApS, 4040 Jyllinge (DK)
(72) Inventor: RØRVIG, Simon, 4050 Skibby (DK)
(74) Representative: Larsen & Birkeholm A/S

(57) **Abstract**

The invention relates to a grinder for crushing spices, which grinder includes: a first grinder part (100) with crushing means for comminuting a spice and a second grinder part (100') with crushing means for crushing a spice. The first and second grinder parts (100,100') comprise mutually adapted coupling means that enable the first and second grinder parts (100, 100') to be connected in a rotatable engagement. The crushing means in the first grinder part and second grinder part 100, 100') are mutually adapted so that the crushing means interact and thereby crush a spice placed between them, when the first grinder part and the second grinder part (100, 100') are rotated while connected. The means of the first grinder part and the second grinder part (100, 100') are the same.

## Description

The invention relates to a grinder for crushing spices, which grinder includes: a first grinder part with crushing means for crushing a spice; a second grinder part with crushing means for crushing a spice, which first and second grinder parts comprise mutually adapted coupling means that enable the first and second grinder part to be connected in a rotatable engagement, which crushing means in the first grinder part and second grinder part are mutually adapted so that the crushing means interact and thereby crush a spice placed between them, when the first grinder part and the second grinder part are mutually rotated while they are connected.

Spice mills, also known as spice grinders or just grinders, are essential kitchen tools designed to grind spice corns into a fine powder or coarser particles. The mechanism within these devices involves a combination of mechanical components working in tandem to achieve the desired output.

The outer shell of spice mill is normally cylindrical in shape, and it serves as the container for the spice corns. It is commonly made from materials such as wood, metal, or acrylic, providing durability and aesthetics to the device. The outer shell also protects the internal components from external elements. Within the grinder/container, there is normally a designated chamber for holding spice corns. This chamber prevents spillage and ensures a controlled dispensing of spice corns into the grinding mechanism.

At the core of the prior art spice mill is normally the grinding mechanism located. This mechanism is responsible for converting whole corns into ground spice. There are at least two primary types of grinding mechanisms: burr grinders and blade grinders. Burr grinders consist of two serrated metal or ceramic plates that crush the spice corns, while blade grinders use a rotating blade to slice the spice corns. An axle or pivot is a pivotal component that connects the grinding mechanism to a turning knob or handle on the top of the spice mill. It facilitates the rotational movement required for grinding.

Located at the top of the spice mill, a turning knob or handle may usually be provided. When rotated, it transmits the turning motion to the grinding mechanism through an axle, causing the spice corns to be crushed or sliced based on the grinder type. In some spice mills, especially those with a manual crank, a gear mechanism may be employed to convert the rotational motion of the turning knob into the linear motion necessary for grinding. Gears help amplify the force applied by the user, making it easier to grind tougher spice corns. A retaining spring may ensure consistent pressure between the grinding plates in a burr grinder, and it entails uniformity in the grinding process by preventing any gaps or inconsistencies in the grinding surface. A base or stand of the spice mill may provide stability during use and may serve as a foundation for the internal components. The base is thus designed to prevent tipping and ensures that the grinding mechanism operates smoothly.

In summary, a spice mill operates through the integration of several different components. Today's grinders are thus complex and thus expensive to manufacture. It is an object of the invention to remedy problems with the known technique.

This is achieved in that, the first grinder part and the second grinder part are essentially identical.

Embodiments of the invention are recited in the dependent claims.

An embodiment of the invention will now be described with reference to the figures in which:
Fig. 1 shows in perspective the individual parts/components of a grinder for crushing spices.
Fig. 2 shows in perspective a grinder for crushing spices.
Fig. 3 shows a section of a grinder for crushing spices.
Fig. 4 shows a section of a grinder for crushing spices.
Fig. 5 shows a section of a grinder for crushing spices provided with an ejector mechanism.
Fig. 6 shows in perspective two grinder parts being interlocked by a geometric locking mechanism.
Fig. 7 shows in perspective the two grinder parts shown in figure 6 in a position where they are not interlocked by the geometrical locking mechanism.

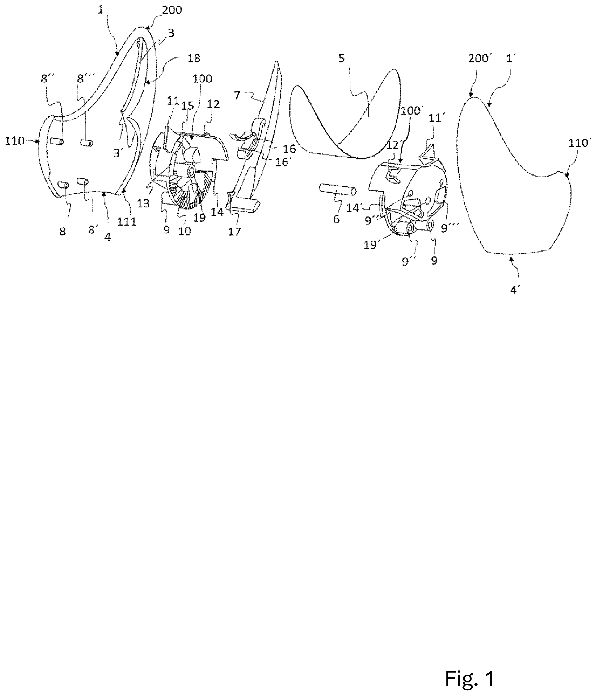

In Figure 1, the individual parts in a grinder for crushing spices are shown in an exploded view. To the left in the figure is shown a side part 1 of the grinder for crushing spices. This side part 1 - which also serves as a control handle - is normally totally identical to a side part 1' shown on the right side of the figure and when the two side parts 1,1' are assembled in a grinder for crushing spices according to the invention, they form the outer parts of said grinder for crushing spices. The identical side parts 1,1' are provided with a contact surface 3 and side edges 18 and in addition, the side parts also includes four protruding pins/shafts 8, 8', 8", 8‴. These four shafts are mutually adapted to four openings 9, 9 ', 9", 9‴ in a grinder part 100, which is shown to the right of the side part 1. The openings and shafts are preferably made so that they can be assembled in a press fits, ie. that the shafts are made with an oversize (slightly larger) than the openings they are to be inserted in. This allows the grinder part and side part to be put together by pressing the openings in the grinder part over the larger shafts provided on the side part. Press fits are commonly known to the person skilled in the art, and they can be made in a myriad of ways by the person skilled in the art and they will therefore not be explained further in this application.

According to the invention, a second grinder part 100' is also attached to the other side part 1' in a similar way, and when the two side parts 1, 1' and two grinder parts are assembled in a fully assembled spice grinder having two identical side parts, the two identical grinder parts 100, 100' form an inner grinding mechanism of the grinder for crushing spices.

In the shown embodiments of the invention, the grinder part 100 is totally identical to the grinder part 100' shown further to the right in figure 1, however, total identity is not a fundamental prerequisite for the functionality of the grinder and a skilled person will easily realize that there may be made variations without this affecting the basic idea, namely to make the grinder for crushing spices simpler and with as few different parts as possible. In figure 1, the two grinder parts 100 and 100' are shown from opposite sides. Upwards (in the figure) the grinder parts are designed so that in their assembled state they form an upper opening through which spice can be filled and this opening is preferably connected to an inner chamber 15. A half inner chamber can be seen in the grinder part 100 shown on the left in figure 1. When must be filled with spice, this is done by first removing a lid 5 and then filling spice through an upper opening.

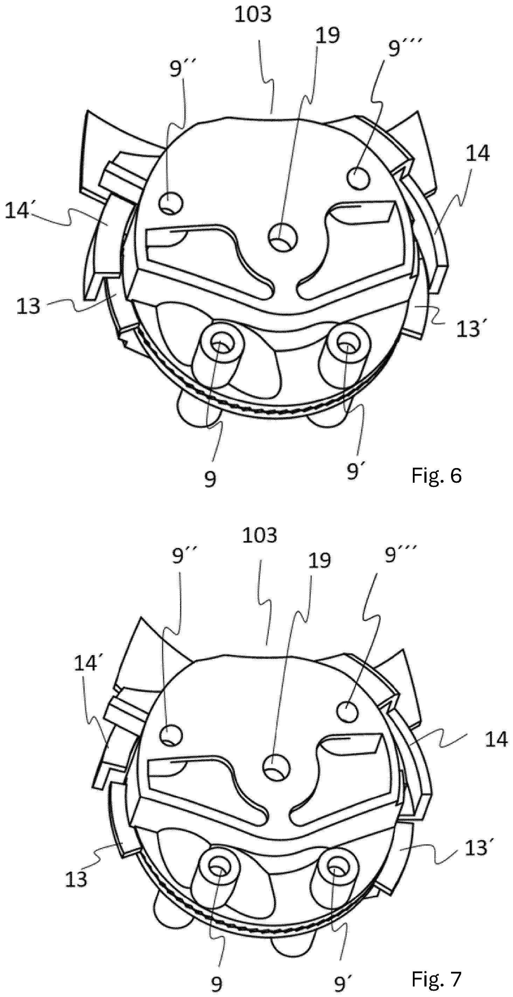

To the right of the grinder part 100, an ejector mechanism 7 is seen, the ejector mechanism is adapted to an inner contact surface/flange 3 located on the side parts 1, 1', so that the ejector mechanism can lie up against this and under an upper edge 3' running along this. To retain the ejector mechanism 7, this is provided with a spring 16 and a locking pin 17. To the right of the ejector mechanism 7, a shaft 6 and a resilient cover plate/lid 5 are seen. The shaft 6 is adapted to a bearing/opening 19 in each of the two grinder parts 100,100'. The plate 5, which is also called the lid or cover plate in this application, is adapted to the two identical side parts 1, 1' so that the lid 5 can cover an opening 103 for filling of spices (not visible in figure 1) in the assembled grinding mechanism. The opening 103 is normally formed directly above the grinding mechanism, such that the grinding mechanism can be filled with the aid of gravity. The opening 103 is normally situated opposite a lower exit opening 4, when the grinder for crushing spice is assembled. The position of the opening 103 is best indicated in figures 6 and 7.

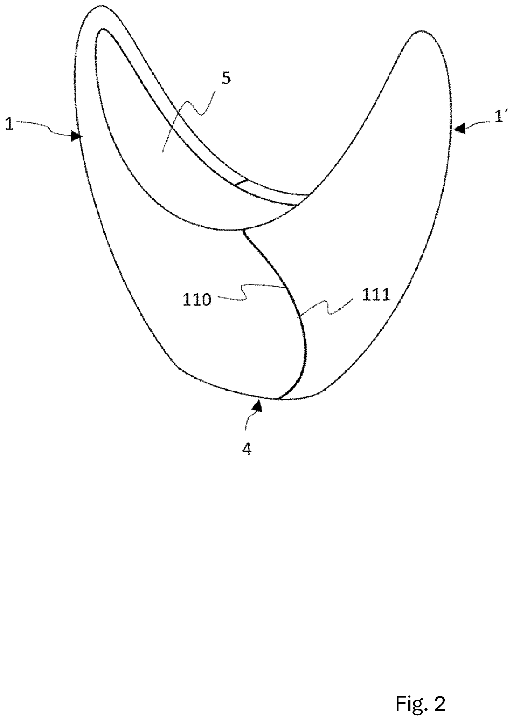

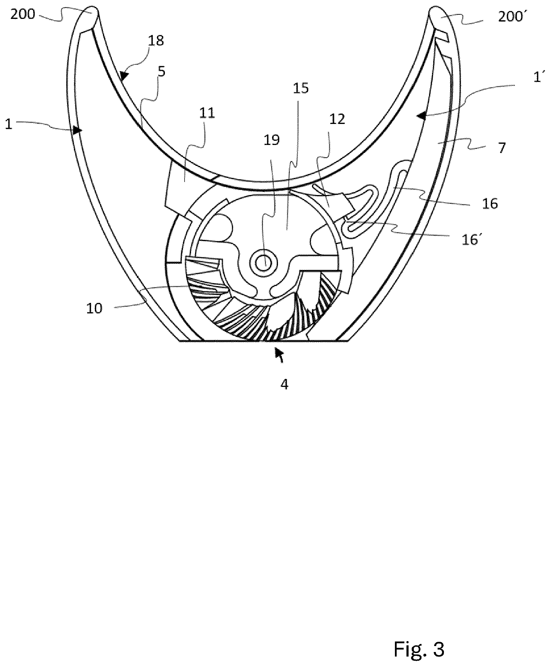

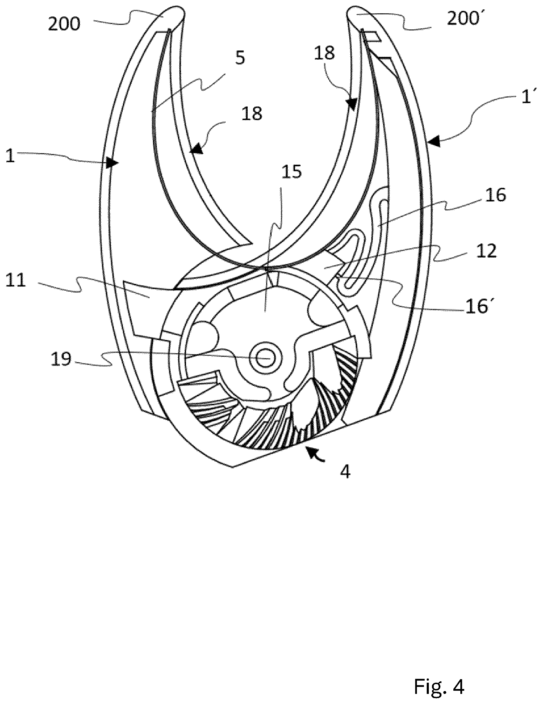

The lid 5 is held in the assembled grinder above the upper opening 103 by an edge 18 on the side parts 1,1' and especially the ends of the lid 5 is held under the edge close to the side parts 1,1 'ends 200,200 '. The grinder itself is assembled by connecting the two grinder parts 100,100' to each side part 1,1' and this is done by pressing the pins/shafts 8, 8', 8", 8" of the side parts into the openings 9, 9', 9",9‴ of the two grinder parts 100,100'. The ejector mechanism 7 is then mounted in one side part and the side parts with connected grinder parts are then brought together such that the shaft 6 lies in the bearing openings 19 of the two grinder parts. The two identical side parts are made with rounded bearing edges 110 and 111 which are mutually adapted such that these allow rotation when the side parts are rotated among themselves about the axle 6 as shown in figures 3 and 4. The rounded bearing edges 110, and 111 on the identical side parts are also adapted such that they are tightly assembled when the two identical side parts are not rotated among themselves as e.g. shown in figure 2.

When the two side parts 1 and 1' are assembled, the lid 5 is mounted such that it lies under an edge 18 provided on the side parts, as shown in figure 3, where also the location of the ejector mechanism 7 in an assembled grinder is shown.

Figure 2 shows an assembled spice grinder and from this figure it is clearly seen how the two bearing edges 110 and 111 are assembled in a tight connection when the spice grinder is in its "relaxed position" which is the position it occupies when in its assembled state it is not affected by external forces as explained in greater details below with reference to figure 3 and 4.

Figures 3 and 4 show the two positions between which the side parts move during normal use of the spice grinder, where figure 3 is the resting/relaxed position taken by the spice grinder when it is unloaded (not in use). The size and parts of the spice grinder itself are normally adapted to a human hand so that the side parts 1,1' can be pressed (rotated) against each other, and figure 4 shows the mutual positions the parts of the spice grinder take when a hand has pressed (rotated) the two side parts towards each other during mutual rotation of the two grinder parts. Please note that only a half spice grinder is shown in figures 3 and 4.

In order to hold together the spice grinder, the grinder parts 100 and 100' (which are identical in all the shown embodiment) are designed with a geometric lock that holds them together during normal use, i.e. use as shown in figures 3 and 4. By making the grinder parts with a geometric lock that can hold the two identical grinder parts in one engagement - where they can be rotated without being separated - via the geometric lock it is achieved that all the internal parts of the spice grinder are secured in locking engagement in the assembled spice grinder during use. In other words: that the geometric lock entails that the parts do not fall apart during the regular use of the spice grinder.

This is because all the other parts engage with the side parts 1,'1 - via press fits, contact flange/surface 3 and upper edge 18 - and/or the grinder parts 100,10+', via the spring 16 and the stop 17.

The functionality of an example of a geometric lock will be explained in greater details below with reference to figures 6 and 7, where an example of such is explained.

Figures 3 and 4 also show how the spring-loaded cover 5 and protruding wings 11, 11', 12 and 12 ' on the grinder parts 100,100 ' ensure that the parts of the grinder during its normal use are only rotatable between the two extreme positions shown in figures 3 and 4. To achieve this functionality, the spring plate/lid 5 is made such that the lid presses the tops of the side parts/handle parts 200,200' away from each other until a stop mechanism kicks in. The stop mechanism is made by providing each of the grinder parts 100 and 100 ' with a projecting wing 11, 11' that will hit the spring plate/lid when the two side parts 1,1' as shown in figure 3 are in the spice grinders "relaxed position". Two other wings 12 and 12' will correspondingly stop a further turning when the handles/side parts are compressed as shown in figure 4, because, as seen in the figure, it will hit the plate/lid 5 when the handles 1 and 1' are forced together. The elastic deformation of the plate/lid is clearly shown in figure 4. In this connection, it must be added - that since the assembled grinder contains two identical side parts and two identical grinder parts, of which we only see one in figure 3 - that the same thing happens on the "invisible" grinder part that is positioned in front of the figures, but which cannot be seen. In other words, the plate 5 is hit by the two identical ears when the grinder is in its unloaded state (figure 3) and by two other identical ears when the tops 200 of the sides 1.1' of the grinder are pressed against each other as shown in figure 4.

Figures 6 and 7 show how an embodiment of a geometric lock can be made. The geometric lock shown in these figures comprises two identical flanges 13, 13' and two identical lock screens 14, 14' adapted thereto. In the embodiment shown, one flange 13 sits to the left on the upper grinder part in figures 6 and 7 and the other flange 13' sits to the right on the lower grinder part in figures 6 and 7. As can be seen, the flanges 13 and 13' in figure 6 are in positions where they are respectively below and above the locking screens 14 and 14'. On the left side of the assembled grinder mechanism, the flange 13 (which sits on the upper grinder part) is under one locking screen 14' (which sits on the lower grinder part) and on the right side of the assembled grinder mechanism, the other flange 13' is on top of the other locking screen 14 (which sits on the upper grinder part). Thereby, the two grinder parts - which also sit together in the shown assembled grinding mechanism via the bearings 19 and axle 6 (not shown in figure 6 and 7) - are interlocked during normal use.

In figure 7, is one grinder part (the lower) rotated in relation to the other and here it can be seen that the flanges and locking screens are rotated out of mutual engagement and thereby the two grinder parts can be pulled apart.

In the finished grinder, the geometric lock is preferably constructed in such a way that the grinder parts 100, 100' cannot be pulled apart, when they are rotated in relation to each other between the positions shown in figures 3 and 4.

The geometric lock is thus normally made such that the tops 200 of the side parts must be turned further than to one of the "end positions" shown in figure 3 and 4 - before the geometric lock goes out of engagement. Due to the stop mechanism explained above, this means that the cover plate 5 must be removed to allow this further rotation. This ensures that the parts do not separate during the normal use of the spice grinder. To facilitate the removal of the cover plate 5, the grinder may be provided with an ejector mechanism 7 as shown in figures 3, 4 and 5. The ejector mechanism 7 is normally situated as shown in figures 3 and 4 and it is held in this position by means of a spring mechanism 16 provided on the ejector mechanism. The spring is supported via a small support block 16' on an ear 12.

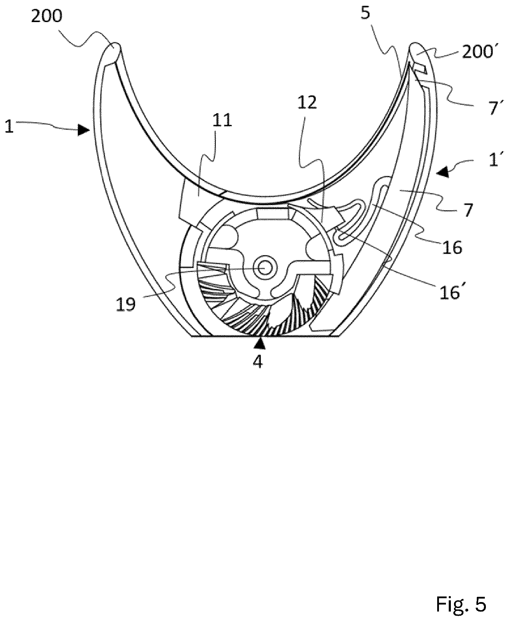

As can be seen in figure 5, the ejector mechanism has here moved slightly to a position where its tip 7' has pushed the lid/spring plate 5 out of its engagement with the edge at the top 200 ' of the side part 1 and this facilitates the removal of the lid from the grinder. This entails cleaning and filling when new spices must be filled into the grinder.

The ejector mechanism itself is designed so that a user with his/her fingers and via the opening in the bottom of the grinder can push it to the position where it releases the top plate 5.

## Claims

1. A grinder for crushing spices, which grinder comprises:
• a first grinder part with crushing means for comminuting a spice
• a second grinder part with crushing means for crushing a spice,
which first and second grinder parts comprise mutually adapted coupling means that enable the first and second grinder part to be connected in a rotatable engagement, which crushing means in the first grinder part and second grinder part are mutually adapted so that the crushing means interact and thereby crush a spice placed between them, when the first grinder part and the second grinder part are mutually rotated while they are connected, **characterized in that**, the first grinder part and the second grinder part are essentially identical.

2. A grinder according to claim 1, **characterized in that**, the coupling means comprise a geometric lock that holds the grinder parts in engagement during a given angular rotation when the first and second grinder parts are mutually rotated, and releases the grinder parts from their mutual engagement during a second given angular rotation when the first and second grinder part mutually rotated,

3. A grinder according to claim 1 or 2, **characterized in that**, the first and second grinder parts contain gripping means in the form of cylinders/holes with an inner given diameter, which are made complementary to the grinder's gripping means in the form of protruding shafts with an outer given diameter, that is larger than the inner diameter of the cylinders/holes so that holes and shafts can be assembled in a press fit.

4. A grinder according to claims 1-3, **characterized in that**, the grinder parts are designed so that when assembled they form a cavity for undivided spice, and that the cavity is positioned so that during use of the grinder part it is located above the outlet opening of the grinder.

5. A grinder according to claims 1-4, **characterized in that**, the crushing means of the grinding comprise hardened steel or ceramics.

6. A grinding according to claims 1-5, **characterized in that**, the crushing means of the grinding comprise exchangeable crushing means in the form of hardened steel or ceramics.

7. A grinder according to claims 1-6 for crushing spices, **characterized in that**, the grinder comprises:
• a first handle part;
• a second handle part;
which first and second handle parts comprise engagement means which can activate the crushing means of the grinder parts, and which first and second handle parts comprise coupling means which enable the first and second handle parts to be connected in a mutually rotatable engagement and in such a way that the handle parts via the engaging means activate the crushing means of the grinder part, **characterized in that** the first and second handle parts are essentially identical.

8. A grinder according to claims 1-7, **characterized in that**, the first and second handle parts are adapted such that in the connected state they form a body with a lower opening above which the connected handle parts essentially have their center of gravity, such that the lower opening edges can be used to form a foot on which the connected handle parts can rest without tipping over and that the grinder part is adapted to the lower opening so that crushed/milled spice can fall out through the lower opening.

9. A grinder according to claims 1-8, **characterized in that**, the handle part (s) is designed so that two handle parts in the connected state form an upper opening leading to an inner container for spice, which opening is located above the lower opening when the grinder rests on the edges of the lower opening.

10. A grinder according to claims 1-9, **characterized in that**, the grinder parts is mainly made of stainless steel, preferably stainless steel of **SAE 316L** grade.
